(19) Europäisches Patentamt

European Patent Office

Office européen des brevets

(11) Veröffentlichungsnummer: **0 374 634**
**A2**

(12) **EUROPÄISCHE PATENTANMELDUNG**

(21) Anmeldenummer: 89122668.0

(22) Anmeldetag: 08.12.89

(51) Int. Cl.⁵: **C04B 35/58**

(30) Priorität: **21.12.88 DE 3842965**

(43) Veröffentlichungstag der Anmeldung:
**27.06.90 Patentblatt 90/26**

(84) Benannte Vertragsstaaten:
**DE FR GB IT SE**

(71) Anmelder: **BAYER AG**

**D-5090 Leverkusen 1 Bayerwerk(DE)**

(72) Erfinder: **Lange, Horst, Dr,**
**Kreuzkamp 42**
**D-4630 Bochum 1(DE)**
Erfinder: **Kannchen, Werner**
**Schumannstrasse 14**
**D-4100 Duisburg 46(DE)**

(54) Verfahren zur Herstellung reaktionsgesinterter Siliciumnitridkeramiken, so erhaltene Siliciumnitridkeramik sowie deren Verwendung.

㊗ Die vorliegende Erfindung betrifft ein Verfahren zur Herstellung reaktionsgesinterter Siliciumnitridkeramik, so erhaltene Siliciumnitridkeramik sowie deren Verwendung.

EP 0 374 634 A2

## Verfahren zur Herstellung reaktionsgesinterter Siliciumnitridkeramiken, so erhaltene Siliciumnitridkeramik sowie deren Verwendung

Die vorliegende Erfindung betrifft ein Verfahren zur Herstellung reaktionsgesinterter Siliciumnitridkeramik, so erhaltene Siliciumnitridkeramik sowie deren Verwendung.

Keramische Formteile aus reaktionsgesintertem Siliciumnitrid (RBSN) finden wegen ihrer thermischen Beständigkeit, ihrer chemischen Resistenz sowie ihrer mechanischen Festigkeit auch im Bereich hoher Temperaturen zunehmend technische Beachtung und werden zum Beispiel als Thermoelementschutzrohre, als Tiegel und Begasungslanzen für schmelzmetallurgische Zwecke und anderes mehr eingesetzt.

Zur Herstellung von RBSN-Formteilen geht man von fein aufgemahlenem Siliciumpulver aus, dem andere Stoffe, wie z.B. SiC-, $Si_3N_4$-, $Si_2N_2O$- oder $Al_2O_3$-Pulver als Füllmedien, geringe Mengen Fe als Nitridierkatalysator sowie MgO oder $Y_2O_3$ - (falls eine nachträgliche Weiterverdichtung durch heißisostatisches Pressen, Heißressen oder druckloses Sintern beabsichtigt ist) als Sinterhilfen zugesetzt werden können.

Die Pulverformgebung kann durch Pressen, Stampfen, Schlickerguß, Extrusion oder Spritzguß erfolgen. Gemäß der DE-A 3 639 335 können anorganische Additive, wie z.B. Kieselsol als Bindemittel bei der Pulverformgebung verwendet werden. Derartige Stoffe bilden schwerflüchtige Rückstände und erfordern somit keine besonderen Vorsichtsmaßnahmen beim Erhitzen des Pulverformteiles auf die notwendige Reaktionssinterungstemperatur.

Im Falle der Anwesenheit größerer Mengen organischer Additive, wie Plastifizier- und Bindemittel, müssen diese Zusatzstoffe bei erhöhter Temperatur und/oder reduziertem Druck vor der Reaktionssinterung aus dem Formteil in schonender Weise ausgetrieben werden, um eine Zerstörung des Formteiles durch zum Beispiel unkontrolliertes Verdampfen der Hilfsstoffe zu vermeiden.

Je nach Art der Additive können diese verdampfen, ausschmelzen, thermisch abgebaut, d.h. vercrackt oder ausgebrannt werden. Nach diesem Schritt werden die Grünlinge unter einer Stickstofatmosphäre zur RBSN-Keramik reaktionsgesintert.

Bei der Herstellung der RBSN-Keramik bleibt die Dimension des Grünlings während der Reaktionssinterung praktisch erhalten. Eine nennenswerte Schwindung wie bei gewöhnlichen Sinterprozessen tritt nicht auf.

Diese Dimensionsstabilität erlaubt eine sehr endabmessungsnahe Anfertigung des Grünlings. Eine mechanische Nachbearbeitung des sehr harten und spröden Werkstoffes ist im allgemeinen nicht erforderlich oder kann auf ein Minimum reduziert werden.

Die Reaktionssinterung von Formteilen erfolgt üblicherweise in Kammeröfen. Bei sehr anspruchsvollen Formteilen werden vorzugsweise evakuierbare Kaltwandöfen eingesetzt, so daß nach Beaufschlagung mit einer definierten Stickstoffatmosphäre die exotherm verlaufende Reaktionssinterung über eine genaue Temperaturkontrolle durch eine Regelung des Stickstoffangebotes sehr präzise gesteuert werden kann.

Sofern keine mechanische Feinbearbeitung erforderlich ist, ist die Herstellung der RBSN-Keramik mit der Reaktionssinterung abgeschlossen. In einem weiteren Prozeßschritt kann das immer noch poröse Gefüge des RBSN-Formteiles durch nachträgliches Sintern weiter verdichtet werden kann. Hierdurch können porenfreie Siliciumnitrid-Formteile theoretischer Dichte hergestellt werden.

Einen Überblick über den gegenwärtigen Stand der Technik bei Herstellung und Anwendung keramischer Werkstoffe auf der Basis von Siliciumnitrid findet man zum Beispiel in K.H. Jack, "Nitrogen Ceramics", Endeavour (New Series), 11 (2), S. 80 ff (1987).

Während die oben beschriebenen Arbeitsverfahren zur Herstellung kleinformatiger und mittelgroßer RBSN-Formteile gut geeignet sind, stößt man bei der Herstellung groß dimensionierter RBSN-Formteile, wie z.B. bei Herstellung sehr langer RBSN-Stäbe oder -Rohre, aufgrund der geringen Dimensionen der Nitridieröfen auf erhebliche technische Schwierigkeiten.

Einer beliebigen Ofenvergrößerung sind durch die für den Nitridierprozeß notwendigen hohen Temperaturen und den Ausschluß von Luft und Feuchtigkeit technische und wirtschaftliche Grenzen gesetzt. Auch würde eine größere Dimensionierung der üblichen Nitridieröfen nur zu einer erneuten Fixierung der Maximaldimensionen des zu nitridierenden Formteiles führen.

Ein wesentliches Kennzeichen der bisher bekannten Arbeitsverfahren zur Herstellung von RBSN-Formteilen ist, daß der ganze Grünling in Nitridierzyklen während einer oder mehrerer Ofenreisen reaktionsgesintert wird. Es handelt sich also um einen typischen diskontinuierlichen Prozeß, in dem Formteile hergestellt werden, deren Maximalabmessungen stets durch die Dimensionierung des Nitridierofens vorgegeben sind.

Es stellte sich daher die Aufgabe, ein wirtschaftliches Verfahren zu finden, das die beschriebenen Nachteile des Standes der Technik nicht aufweist.

Überraschenderweise wurde nun gefunden, daß

die Reaktionsinterung auch so erfolgen kann, daß man eine im Vergleich zu den Dimensionen des Grünlings schmale Reaktionzone langsam über den Grünling hinwegwandern läßt.

Gegenstand dieser Erfindung ist somit ein Verfahren von reaktionsgesinterter Siliciumnitridkeramik, bei dem die Nitridierung des zu nitridierenden Siliciumpulverformteils zonenweise erfolgt.

Die Reaktionsinterung erfolgt bevorzugt in einer Stickstoffatmosphäre, der aus prozeßtechnischen Gründen Wasserstoff und/oder Argon bzw. Helium beigefügt sein kann. So kann es vorteilhaft sein, einen Zusatz von Wasserstoff zur Stickstoffatmosphäre zur Ausbildung einer feineren, gleichmäßigeren Gefügestruktur vorzunehmen, was zu einer höheren mechanischen Festigkeit der RBSN-Keramik führt. Über einen Argon-oder Heliumzusatz läßt sich durch Reduktion der Stickstoffkonzentration in der Ofenatmosphäre die Kinetik der Reaktionsinterung beeinflussen und somit die Exothermie des Nitridierprozesses kontrollieren.

Bevorzugt wird das erfindungsgemäße Verfahren so durchgeführt, daß das zu nitridierende Siliciumpulverformteil kontinuierlich oder diskontinuierlich durch eine Reaktionsinterzone bewegt wird, in der in einer stickstoffhaltigen Atmosphäre bei Temperaturen von 1200 bis 1600°C, vorzugsweise 1250 bis 1500°C, die Umsetzung von Silicium zu Siliciumnitrid stattfindet.

Falls in einer strömenden Gasatmosphäre gearbeitet wird, ist es günstig, die Strömungsrichtung des Reaktionsgases entgegengesetzt zur relativen Vorschubrichtung des Formteiles einzustellen. Nach diesem Gegenstromprinzip besteht eine einfache Möglichkeit, die beim Austreiben oder Vercracken der organischen Hilfsstoffe entstehenden Abgase von der Reaktionsinterungszone fernzuhalten und ohne Beeinflussung des Nitridierungsprozesses aus dem Ofen zu spülen. Es ist aber auch mölich, die Reaktionsinterung in einer gleichsinnig zur Formteilbewegung strömenden oder aber einer ruhenden Gasatmosphäre durchzuführen.

Das zu nitridierende Formteil wird bei dieser Arbeitsweise langsam und kontinuierlich durch eine oder mehrere Zonen geführt, deren Atmosphäre und Temperaturen die Umsetzung von Silicium mit Stickstoff zu Siliciumnitrid erlauben. Die Geschwindigkeit, mit der das Formteil durch die Reaktionsinterungszone geführt wird, d.h. die Verweilzeit eines Formteilsegments in der Reaktionsinterungszone, muß sich natürlich am gewünschten Umsetzungsgrad, der Wandstärke des Formteiles, der Dichte und der Pulvercharakteristik des Grünlings sowie an den Temperaturen, die in der Reaktionsinterungszone herrschen, orientieren. Falls erforderlich, müssen auch die Zeiten und Temperaturen, die zur Austreibung der bei der Pulverformgebung evtl. notwendigen Additive notwendig sind, berücksichtigt werden.

Ebensogut wie man das zu nitridierende Formteil durch die Nitridierzone oder die -zonen wandern lassen kann, ist es natürlich auch möglich, die Reaktionsinterungszone an einem ruhenden Formteil entlangzuführen. Diese Vorgehensweise bietet sich zum Beispiel bei der Reaktionsinterung von Formteilen mit Geometrien an, die eine Führung durch den Ofen sehr erschweren würden. In gleicher Weise lassen sich so auch Formteile mit einer sehr geringen mechanischen Grünlingsstabilität reaktionsintern.

Eine weitere bevorzugte Ausführungsform des erfindungsgemäßen Verfahrens besteht also darin, daß die Reaktionsinterungszone kontinuierlich oder diskontinuierlich über das zu nitrierende Siliciumpulverformteil hinwegbewegt wird.

Um diesen Prozeß möglichst ökonomisch zu führen, kann es vorteilhaft sein, den zur Reaktionsinterung verwendeten Ofen in drei bzw. vier Arbeitszonen zu unterteilen, deren Temperaturen oder Temperaturgrdienten durch geeignete Heizungen separat geregelt werden können. Das zu nitridierende Formteil kann in einer ersten Zone zunächst im Durchlaufverfahren getrocknet werden, bevor es in einer zweiten Zone den Prozeß zum Austreiben oder Vercracken der evtl. benötigten organischen Plastifizier- oder Bindemittel durchläuft.

Es ist somit besonders vorteilhaft, daß das zu nitridierende Siliciumpulverformteil vor Erreichen der Reaktionsinterungszone zusätzliche Heizzonen durchläuft, in denen eine Trocknung des Formteils, eine Aushärtung anorganischer oder organischer Bindemittel, eine Austreibung oder Vercrackung anorganischer oder organischer Additive und oder eine mechanische Verfestigung des Grünzustandes durch Ansintern oder Annitridieren der Siliciumpartikel des Pulverformteils erfolgen kann.

Falls es die Geometrie oder auch die Führung des Formteiles durch den Ofen erforderlich macht, kann in einer dritten Zone zunächst eine leichte mechanische Verfestigung des Gefüges durch leichtes Versintern oder durch Annitridierung der Siliciumpartikel erfolgen. In der vierten Zone - der eigentlichen Nitridier- oder Reaktionsinterungszone - läuft schließlich die Reaktionsinterung bis zum gewünschten Ausmaß ab. Es ist jedoch auch möglich, die Heizungen der Reaktionsinterungszone so zu gestalten, daß Trocknung, Bindemittelaustreibung, Gefügeverfestigung und Reaktionsinterung im Temperaturfeld der Reaktionsinterungszone allein erfolgen können.

Die Geschwindigkeit, mit der das Formteil durch die Reaktionsinterungszone wandern kann, hängt natürlich prinzipiell vom langsamsten Schritt auf dem Weg zur RBSN-Keramik ab: Dies kann, je nach Art und Menge der verwendeten organischen Additive, nach Formteilwandstärke, -dichte und -geometrie, nach der Nitridierkinetik des Siliciumpulvers bzw. des Pulverformteiles, nach Art und Menge der verwendeten Füllmedien, nach gewünschtem Umsetzungsgrad, nach den in den verschiedenen Zonen herrschenden Temperaturen und je nach Art und Strömungsgeschwindigkeit der Nitridiergasatmosphäre der Trocknungsschritt, der Schritt zum Austreiben der organischen Additive, der Schritt zur Gefügeverfestigung oder Reaktionssinterungsschritt sein.

Je nach Art und Menge der verwendeten Hilfsstoffe kann aber auch auf einen besonderen Schritt zur Austreibung oder Vercrackung dieser Additive verzichtet werden. Dies ist zum Beispiel bei trockengepreßten Formteilen möglich, deren geringer Bindemittelgehalt sich meist nicht störend bemerkbar macht. Je nach angewandtem Formgebungsverfahren kann es ebenso möglich sein, auf einen speziellen Vertrocknungsschritt und damit auf die zu durchlaufende Trocknungszone zu verzichten.

Um eine optimale Ausnutzung der Nitridierkinetik zu ermöglichen, kann der Grünling auch mehrere hintereinander angeordnete Reaktionszonen unterschiedlich hoher Temperaturen durchlaufen.

Die Reaktionssinterungszone selbst kann entweder durch nur eine Heizung auf eine bestimmte Maximaltemperatur gebracht oder durch unabhängig voneinander regelbare Heizungen auch in Zonen unterschiedlich hoher Temperaturen aufgespalten werden. Aufgrund der Exothermie der Nitridierungsreaktion und der damit verbundenen Überhitzungs- und Aufschmelzgefahr des zu nitridierenden Formteils kann es daher sinnvoll sein, das Formteil mehrere unterschiedlich heiße Reaktionszonen durchlaufen zu lassen, deren Temperaturen von Zone zu Zone in dem Ausmaß, in dem die allmähliche Umwandlung des Siliciumpulverformteiles in RBSN erfolgt, steigen können. Auf diese Weise ist es möglich, hohe Umsetzungsgrade erzielen zu können, ohne ein Aufschmelzen des Formteiles zu riskieren.

Eine weitere bevorzugte Ausführungsform des erfindungsgemäßen Verfahrens besteht somit darin, daß das zu nitridierende Siliciumpulverformteil durch mehrere aufeinanderfolgende Reaktionssinterzonen hindurchbewegt wird, deren Temperaturen unabhängig voneinander eingestellt und geregelt werden können.

Bei weiteren Ausführungsvarianten ist es natürlich auch denkbar, die Temperaturen der Reaktionssinterungszonen während der Zonennitridierung nicht konstant zu lassen, sondern zeitabhängig zu ändern. Diese Arbeitsweise eignet sich ebenso wie der Durchlauf des Formteiles durch verschieden lange Reaktionssinterungszonen, wodurch bestimmte Verweilzeiten in einer bestimmten Reaktionszone möglich werden, oder eine beschleunigte Bewegung des Formteils durch die Reaktionssinterungszonen zur Herstellung von RBSN-Formteilen mit Siliciumnitridkonzentrationsgradienten, z.B. über die Formteillänge. Derartige Keramiken lassen sich natürlich auch durch unterschiedliche Verweilzeiten einzelner Abschnitte in den Reaktionssinterungszonen herstellen, wobei das Formteil unstetig durch die Nitridierzonen geführt wird.

Es kann auch besonders vorteilhaft sein, das Siliciumpulverformteil eine oder mehrere Reaktionszonen mehrfach durchlaufen zu lassen.

Das erfindungsgemäße Verfahren läßt sich vorteilhaft nicht nur zur Herstellung beliebig langer RBSN-Voll-oder Hohlprofile, sondern auch zur Herstellung kreisförmig oder elliptisch in sich geschlossener Voll- oder Hohlprofile mit beliebig großen Radien oder Querschnitten einsetzen. Das erfindungsgemäße Verfahren läßt sich ebenso zur Herstellung von Formteilen einsetzen, die entlang der Wanderungsrichtung der Nitridierzone einen Siliciumnitrid-Konzentrationsgradienten besitzen. Beispielhaft seien hier Stäbe oder Rohre genannt, die an einem Ende aus reinem versintertem Silicium bestehen und entsprechend der Wanderungsrichtung und -geschwindigkeit der Nitridierzone oder des Formteils durch die Nitridierzone einen kontinuierlich zunehmenden Siliciumnitridgehalt besitzen, bis schließlich am entgegengesetzten Ende des Formteils der maximal gewünschte RBSN-Gehalt erreicht wird. Vorzüge dieser Formteile sind zu sehen einmal in einer leichteren mechanischen Bearbeitbarkeit der annitridierten oder lediglich gesinterten Zonen, bevor in einem abschließenden Nitridierprozeß die Überführung in die fertignitridierte RBSN-Keramik erfolgt. Zum anderen kann eine lediglich annitridierte oder auch nur einfach durch Sinterung verfestigte Zone eines Grünlings Vorteile gegenüber fertiggesinterten RBSN-Keramiken bei Füge- und Verbindungstechniken zum Aufbau komplizierterer Formteile besitzen.

Schließlich sei noch bemerkt, daß nach der oben beschriebenen Zonennitridierung auch die Herstellung von Formteilen möglich ist, die aus einander abwechselnden Zonen von RBSN und gesintertem Silicium bestehen.

Gegenstand dieser Erfindung sind aber auch nach dem erfindungsgemäßen Verfahren hergestellte Siliciumnitrid-Keramiken. Aufgrund des Verfahrens weisen diese die Besonderheit auf, daß Siliciumnitridgehalt über die Formteillänge und/oder über den Formteilquerschnitt variiert.

Es ist überraschend, daß sich beim erfindungsgemäßen Verfahren die Zonenreaktionssinterung des Siliciumpulverformteils zu einer RBSN-Keramik trotz der hohen Temperaturgradienten in der Nitridierzone und der unterschiedlichen Wärmeleitfähigkeiten und Ausdehnungskoeffizienten von Silicium und Siliciumnitrid ohne Risse, Brüche oder Deformationen des Formteils durchführen läßt. In den üblichen Nitridierprozessen ruht das Formteil in einer Ofenkammer, wobei es in seiner Gesamtheit der zu einer bestimmten Zeit jeweils herrschenden Ofentemperatur ausgesetzt wird und die zeitliche Führung der Ofen- bzw. Reaktionssinterungstemperatur der Nitridiercharakteristik des Siliciumpulverformteiles angepaßt wird. Hier jedoch bewegt sich das Formteil durch die Temperaturfelder einer oder mehrerer im Vergleich zu den Formteildimensionen schmaler Reaktionssinterungszonen und wird somit jeweils nur zonenweise einer bestimmten Ofentemperatur ausgesetzt. Hier wird also nur ein Teil des Formteiles auf die zur Reaktionssinterung erforderliche Temperatur erhitzt.

Diese Arbeitsweise, die sich grundlegend von den bisher bekannten Arbeitsmethodiken zur Herstellung von RBSN-Formteilen unterscheidet, läßt sich besonders vorteilhaft zur Herstellung beliebig langer, im Extremfall endloser RBSN-Profile einsetzen. Die Herstellung von langen Platten, Vollstäben, Rohren oder anderen Hohlprofilen, wie z.B. Wabenkörpern beliebigen Querschnitts, beliebig langer Abmessungen und mit oder ohne Oberflächenstruktur, wird damit auf rationelle Art und Weise mit geringem technischen Aufwand möglich.

Gegenstand dieser Erfindung ist somit auch die Verwendung der erfindungsgemäßen Siliciumnitridkeramik als Begasungslanzen, Transportleitungen oder -rinnen für Metall- und Salzschmelzen, als Thermoelementschutz- oder -führungsrohre, als Wärmetauscher oder Katalysatorträger.

Anhand der folgenden Beispiele wird das erfindungsgemäße Verfahren erläutert, ohne daß hierin eine Einschränkung des Erfindungsgedankens zu sehen ist.

Beispiel 1

Aus einem trockenpreßfähigen Siliciumpulver wird ein 100 cm langes Rohr mit einer Wandstärke von 6 mm und einem Außendurchmesser von 18 mm gepreßt.

Dieser Grünling wird anschließend durch eine 10 cm lange, auf 1380 °C erhitzte Glühzone eines Rohrofens bewegt. Als Reaktionsgas dient eine langsam mit 10 l/h strömende, im Gegenstrom geführte Reinstickstoffatmosphäre. Das Rohr wird in Abschnitten von jeweils 10 cm durch die Nitridierzone geführt; jeder Rohrabschnitt bleibt 24 h lang in dieser Zone, bevor das Rohr erneut um 10 cm weitergeführt wird.

Nachdem das Siliciumpulverformteil in seiner gesamten Länge durch den Rohrofen gewandert war, zeigte sich, daß es ohne Bruch oder Deformation gleichmäßig zu einem reaktionsgesinterten Siliciumnitrid-Rohr umgewandelt worden war.

Beispiel 2

Ein Rohr mit den unter 1. beschriebenen Abmessungen wird mit einer Geschwindigkeit von 5 mm/h stetig durch die ebenfalls unter 1. beschriebene Glühzone eines Rohrofens bewegt. Als Reaktionsgas dient eine im Gegenstrom geführte, langsam strömende Reinstickstoffatmosphäre (Strömungsgeschwindigkeit ca. 10 l/h).

Nach vollständigem Durchlauf des Formteiles durch den Rohrofen ist es gleichmäßig und ohne Bruch oder Deformation in ein reaktionsgebundenes Siliciumnitrid-Rohr umgewandelt worden.

Beispiel 3

Ein Rohr mit den im Beispiel 1 beschriebenen Abmessungen wird in Abschnitten von jeweils 10 cm Länge durch die ebenfalls unter 1 beschriebene Glühzone eines Rohrofens bewegt. Als Reaktionsgas dient eine mit 10 l/min langsam gegenströmende Reinstickstoffatmosphäre.

Während der erste Rohrabschnitt 24 h in der Reaktionszone belassen wird, werden die darauf folgenden jeweils 2,5 h früher als der jeweils vorhergehende Rohrabschnitt aus der Reaktionszone herausgeführt.

Nach dem vollständigen Durchlauf des Rohres zeigte sich weder Deformation noch Bruch des Formteiles. Die Bestimmung des $Si_3N_4$-Gehaltes über die Rohrlänge zeigte eine kontinuierliche Abnahme des Siliciumnitridgehaltes von ca. 75 % im ersten auf ca. 10 % im letzten Abschnitt.

**Ansprüche**

1. Verfahren zur Herstellung reaktionsgesinterter Siliciumnitridkeramiken, dadurch gekennzeichnet, daß die Nitridierung des zu nitridierenden Siliciumpulverformteiles zonenweise erfolgt.

2. Verfahren zur Herstellung reaktionsgesinterter Siliciumnitridkeramiken gemäß Anspruch 1, dadurch gekennzeichnet, daß das zu nitridierende Siliciumpulverformteil kontinuierlich oder diskontinuierlich durch eine Reaktionssinterzone bewegt wird, in der in einer stickstoffhaltigen Atmosphäre bei Temperaturen von 1200 bis 1600 °C, vorzugsweise 1250 bis 1500 °C, die Umsetzung von Silicium zu Siliciumnitrid stattfindet.

3. Verfahren zur Herstellung reaktionsgesinterter Siliciumnitridkeramiken gemäß einem der Ansprüche 1 oder 2, dadurch gekennzeichnet, daß die Reaktionssinterungszone kontinuierlich oder diskontinuierlich über das zu nitridierende Siliciumpulverformteil hinwegbewegt wird.

4. Verfahren gemäß einem oder mehrerer der Ansprüche 1 bis 3, dadurch gekennzeichnet, daß das zu nitridierende Siliciumpulverformteil vor Erreichen der Reaktionssinterungszone zusätzliche Heizzonen durchläuft, in denen eine Trocknung des Formteils, eine Aushärtung anorganischer oder organischer Bindemittel, eine Aushärtung anorganischer oder organischer Additive und/oder eine mechanische Verfestigung des Grünzustandes durch Ansintern oder Annitridieren der Siliciumpartikel des Pulverformteiles erfolgen kann.

5. Verfahren nach einem oder mehrerer der Ansprüche 1 bis 4, dadurch gekennzeichnet, daß das zu nitridierende Siliciumpulverformteil durch mehrere nacheinanderfolgende Reaktionssinterungszonen hindurch bewegt wird, deren Temperaturen unabhängig voneinander eingestellt und geregelt werden können.

6. Verfahren gemäß einem oder mehrerer der Ansprüche 1 bis 5, dadurch gekennzeichnet, daß das Siliciumpulverformteil eine oder mehrere Reaktionssinterungszonen mehrfach durchläuft.

7. Siliciumnitridkeramik, hergestellt gemäß einem oder mehrerer der Ansprüche 1 bis 6.

8. Verwendung von Siliciumnitridkeramik gemäß einem oder mehrerer der Ansprüche 1 bis 7 als Begasungslanzen, Transportleitungen oder -rinnen für Metall-oder Salzschmelzen, als Thermoelementschutz- oder -führungsrohre, als Wärmetauscher oder Katalysatorträger.